# EUROPEAN PATENT SPECIFICATION

(11) **EP 3 619 369 B1**
(45) Date of publication and mention of the grant of the patent: **03.03.2021**
(21) Application number: 17721953.2
(22) Date of filing: 01.05.2017
(51) Int. Cl.: F16K 5/04, F16K 5/06, F16K 31/524, F16K 31/528

(54) **A HYDRANT AND USE OF A HYDRANT**
HYDRANT UND VERWENDUNG EINES HYDRANTEN
BORNE D'INCENDIE ET UTILISATION D'UNE BORNE D'INCENDIE

(43) Date of publication of application: 11.03.2020
(73) Proprietor: AVK Holding A/S, 8464 Galten (DK)
(72) Inventor: LAURSEN, Gert Riis, 8660 Skanderborg (DK)
(74) Representative: Patentgruppen A/S
(86) International application number: PCT/DK2017/050133
(87) International publication number: WO 2018/202262

(56) References cited:
- EP-A1- 2 690 226
- DE-C2- 3 500 156
- GB-A- 2 463 687

## Description

### Field of the invention

The invention relates a hydrant comprising a riser pipe through which a fluid flow may be guided and a blocking disc arranged to be displaced in and out of the fluid flow to block the fluid flow through the riser pipe.

The invention further relates to use of a hydrant.

### Background of the invention

A hydrant, also called a fireplug, a fire hydrant, a free flow hydrant and other, is a connection point by which firefighters and others can tap into a typically underground water supply.

In such hydrants, it is important that the flow through the hydrant is substantially unobstructed, primarily to minimize pressure drop but also to make the hydrant more insensitive to hard particles in the water, to offer easy insertion and retrieval of pipe inspection and maintenance equipment and other.

Typically, the closing mechanism of a hydrant is located underground with a stem extending upwards so that the closing mechanism may be operated from ground level. However, if this stem was connected directly to a disc being turned in and out of the flow through the hydrant it would require a massive torque to displace the disc.

From the German patent DE 35 00 156 C2 it is known to form a hydrant with a free flow passage up through the hydrant and a flow blocking mechanism comprising a disc arranged to be displaced perpendicularly in and out of the water flow. The disc is actuated through gearing by means of a stem comprising an upwards facing square protrusion arranged to be engaged and rotated by means of a key, wherein the rotation will vertically displace an outer sleeve inside the hydrant housing. This outer sleeve will in turn engage both the housing and an inner sleeve (driving the blocking disc) through helical tracks. However, such a hydrant design is complex and voluminous.
In the UK patent application GB 2463687 A a through bore hydrant is designed so that the main spindle rotation causes a non-rotating nut to rise on external spindle threads and a secondary spindle to extend downwardly on internal spindle threads of lower pitch to force the seal plate off its seal face. However, the gear ratio of this design is relatively little.

An object of the invention is therefore to provide for an advantageous and cost-effective technique for actuating a hydrant.

### The invention

The invention provides for a hydrant comprising a riser pipe through which a fluid flow may be guided and a blocking disc arranged to be displaced in and out of the fluid flow to block the fluid flow through the riser pipe. The hydrant also comprises a stem arranged to actuate the blocking disc through a gearing, wherein the gearing of the hydrant comprises a gear nut arranged to engage the stem so that when the stem and the nut are mutually rotated, the nut is displaced along the longitudinal direction of the stem. The gearing of the hydrant further comprises a gear sleeve including a sleeve helical track, wherein the gear sleeve is connected to the blocking disc. The hydrant is characterized in that, the gearing of the hydrant further comprises a gear housing comprising a housing helical track, wherein the position of the gear housing is fixed in relation to the riser pipe, and wherein the gear nut is arranged to engage both the sleeve helical track and the housing helical track.

Forming the gear nut so that it engages both the sleeve helical track and the housing helical track is advantageous in that the rotation of the gear sleeve - connected to and driving the blocking disc - is then geared by both helical tracks. I.e. in a relatively tight space the rotation of the gear sleeve can be geared by two helical tracks.

It should also be noted that in this context the term "the gear sleeve is connected to the blocking disc" does both include directly and indirectly connected to the blocking disc. I.e. the gear sleeve could e.g. be directly connected to the blocking disc to rotate the blocking disc in and out of the flow path or the gear sleeve could e.g. be indirectly connected to the blocking disc through a guide pin on a pin plate engaging a pin track on the blocking disc.

In an aspect of the invention, the gear sleeve comprises at least two sleeve helical tracks, wherein the gear housing comprises at least two housing helical tracks and wherein the gear nut is arranged to engage the at least two sleeve helical tracks and the at least two housing helical tracks.

Forming the gearing so that the gear nut engages at least two sleeve helical tracks and at least two housing helical tracks is advantageous in that the load on the nut, the sleeve and the housing can be more evenly distributed and in that the load can be distributed over a larger area.

In an aspect of the invention, the gear nut is arranged to extend through the sleeve helical track and into the housing helical track.

Forming the helical track in the gear sleeve through-going so that the gear nut may extend through the sleeve helical track and into the housing helical track is advantageous in that this provided for a simple and compact gearing design. I.e. because the helical tracks can be formed radially overlapping the total vertical (longitudinal) extent of the gearing - particularly the gear sleeve and gear housing - can be reduced to form a compact gearing.

In an aspect of the invention, the stem comprises an externally threaded part arranged to engage an internally threaded part of the gear nut.

Forming the stem and the nut so that they mutually engage through a threaded connection is advantageous in that this provides simple and efficient means for ensuring that when the stem (or the nut) is rotated, the nut is displaced along the longitudinal direction of the stem.
In an aspect of the invention, the gear sleeve is arranged to enclose a part of the stem.

Forming the gear sleeve so that it encloses at least a part of the stem is advantageous in that this enables a compact gearing design
In an aspect of the invention, the gear housing is arranged to enclose a part of the gear sleeve.

Forming the gear housing so that it encloses at least a part of the gear sleeve is advantageous in that this enables a compact gearing design
In an aspect of the invention, the gear sleeve is arranged to rotate inside the gear housing.

Arranging the gear sleeve so that it rotates inside the gear housing is advantageous in that the gear sleeve and bearings etc. enabling this mutual rotation hereby is better protected and in that this enables a more compact design.

In an aspect of the invention, the gear sleeve is made in a first material, wherein the gear nut is made in a second material and wherein the first material is different from the second material.

The nut will engage the sleeve through surfaces running against each other. Thus, to reduce wear and to reduce the risk of seizing and other types of mechanical damage it is advantageous to form the two contact surfaces in different materials - preferably materials of different hardness.

In an aspect of the invention, the gear nut is predominantly made from brass.

Brass - such as the brass alloy sold under the trademark name "Eco Brass" - has good bearing properties and is easy to machine and it is therefore advantageous to form the gear nut predominantly from brass.

In an aspect of the invention, the pitch of the sleeve helical track is substantially identical with the pitch of the housing helical track.

Forming the sleeve helical track and the housing helical track with substantially the pitch is advantageous in that the loads are hereby more evenly distributed.

In an aspect of the invention, the pitch of the sleeve helical track and the pitch of the housing helical track are substantially constant.

Forming the sleeve helical track and the housing helical track with substantially constant pitch is advantageous in that the loads are hereby more evenly distributed.

In an aspect of the invention, the sleeve helical track and the housing helical track spiral in opposite directions.

Forming the pitch of the sleeve helical track and the housing helical track in opposite directions is advantageous in that the gearing effect hereby is increased.

The invention further provides for use of a hydrant according to any of the above-mentioned hydrants as a free flow hydrant.

Hereby is achieved an even more advantageous embodiment of the invention.

### Figures

An embodiment of the invention will be described, by way of non-limiting example, in the following with reference to the figures in which:
- fig. 1.: illustrates a hydrant, as seen in perspective,
- fig. 2: illustrates a cross section through the middle of a hydrant, as seen from the side,
- fig. 3: illustrates a blocking disc in an open position, as seen from the top,
- fig. 4: illustrates a blocking disc in a closed position, as seen from the top,
- fig. 5: illustrates a partial cross section through a gear housing, as seen in perspective,
- fig. 6: illustrates a gear nut, as seen in perspective, and
- fig. 7: illustrates a gear sleeve, as seen in perspective.

### Detailed description

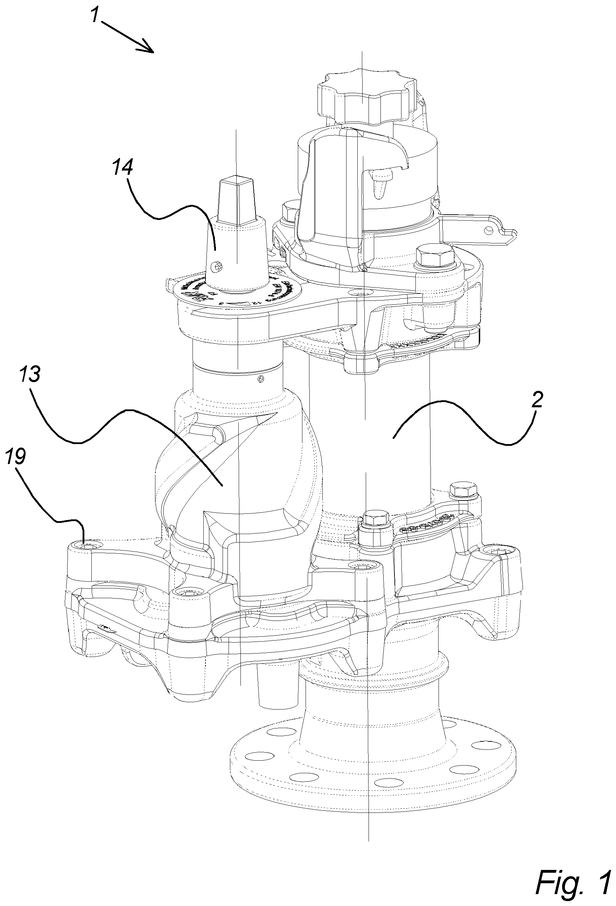

Fig. 1 illustrates a hydrant 1, as seen in perspective.

A hydrant 1 is an outlet from a fluid main - typically an underground main - from which fluid can be tapped. The fluid will typically be water but it could also be fuel, slurry, juice, gas or other.

In this embodiment, the hydrant 1 comprises a riser pipe 2 through which the fluid flow when the hydrant 1 is open.

In this embodiment, the riser pipe 2 is substantially vertical but in another embodiment, the riser pipe 2 could be arranged slanted or even horizontally.
In this embodiment, the fluid flow through the riser pipe 2 can optionally be blocked by means of a blocking arrangement 13 arranged external but parallel to the riser pipe 2. However, in another embodiment, the blocking arrangement 13 could be arranged more or less integrally with the riser pipe 2 and/or the blocking arrangement 13 could be angled in relation to the riser pipe 2.

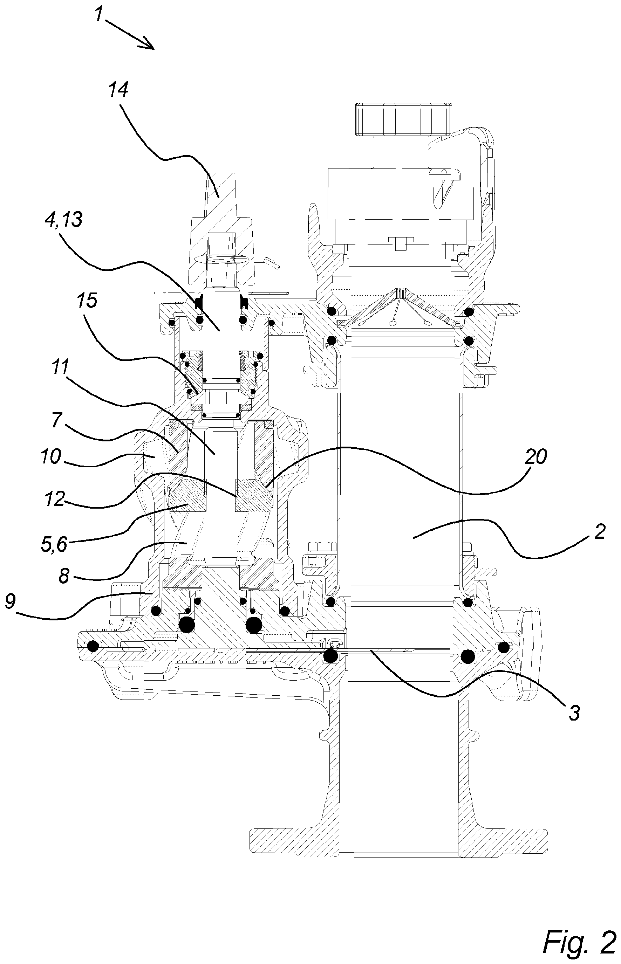

Fig. 2 illustrates a cross section through the middle of a hydrant 1, as seen from the side.

In this embodiment, the blocking arrangement 13 comprises a stem 4 including an interaction part 14 arranged at the upper end of the stem 4. In this embodiment, the interaction part 14 is formed with an external conical square shape so that the stem 4 may be engaged and operated by means of a matching key (not shown). However, in another embodiment, the interaction part 14 could be formed with another shape - such as triangular, polygonal, oval or other - and/or the interaction part 14 could also or instead be arranged internally in or at the end of the stem 4.

In this embodiment, the stem 4 extends almost all the way to the bottom of the blocking arrangement 13 where it engages a gear nut 6 through external thread 11 on the stem 4 meshing with matching internal thread 12 on the gear nut 6. The stem 4 is longitudinally fixed - among other through a bearing arrangement 15 - so that the stem 4 may be rotated but it cannot be axially displaced.

In this embodiment, the gear nut 6 extends into the sleeve helical track 8 of an enclosing gear sleeve 7 and further into a housing helical track 10 in a further enclosing gear housing 9.

However, in another embodiment the nut 6 could be arranged to engage the sleeve helical track 8 and the housing helical track 10 by separate means e.g. by means of arms engaging sleeve helical track 8 and other arms reaching past the gear sleeve 7 and into the housing helical track 10.

In this embodiment, the gear sleeve 7 is axially fixed but free to rotate while the gear housing 9 and thereby the housing helical track 10 is fixed against both axial displacement and rotation. Thus, the nut 6 is rotationally locked against rotation by the housing helical track 10 so that when the stem 4 is rotated the meshing threaded parts 11, 12 will result in the nut 6 being displaced axially - i.e. vertically in the present embodiment - while being forced to follow the curvature of the housing helical track 10 so that the nut 6 is forced to rotate a little as it is forced up or down.

In turn the nut 6 will drive a rotation of the gear sleeve 7 - both by the axial displacement of the nut 6 and the rotation generated by the nut 6 engaging the housing helical track 10 - and since the gear sleeve 7 is also provided with a sleeve helical track 8, the axial motion of the nut 6 will force the gear sleeve 7 to rotate (even if the housing helical track 10 was just a straight vertical track).

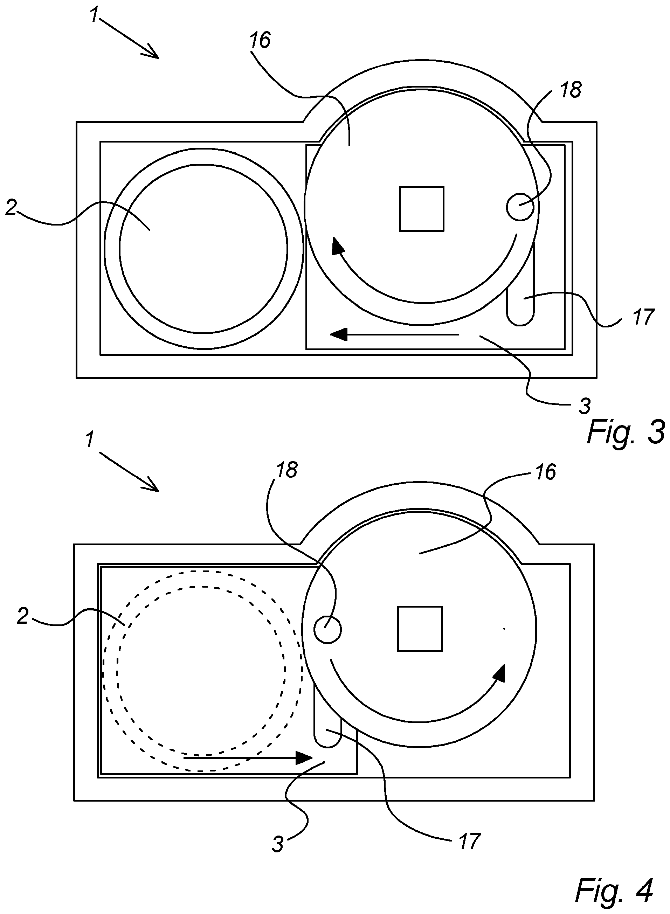

In this embodiment, the gear sleeve 7 is rigidly connected to pin plate 16 engaging a pin track (not shown in fig. 1) on a blocking disc 3 through a guide pin (not shown in fig. 1) which will be discussed and shown in more details in relation to figs. 3 and 4. I.e. when the gear sleeve 7 is rotated it will rotate the pin plate 16 which in turn will displace the blocking disc 3 in and out of the fluid flow through the rises pipe 2 and thereby block or open flow through the hydrant 1.

Thus, through this design the axial displacement of the gear nut 6 will generate double rotation of the gear sleeve 7 from both the sleeve helical track 8 and the housing helical track 10 so that the pitch of the helical tracks 8, 10 may be formed relatively steep without increasing the vertical extent of the blocking arrangement 13. Thus, through this design the blocking arrangement 13 can be formed both durable, simple, efficient and compact.
In this embodiment, the pitch of the sleeve helical track 8 and the housing helical track 10 is approximately 300 mm per rotation all the way - i.e. in this embodiment the pitch of the sleeve helical track 8 is substantially identical to the pitch of the housing helical track 10 and the pitch of the sleeve helical track 8 and the housing helical track 10 are substantially constant all the way. However, in another embodiment the pitch of the sleeve helical track 8 and/or the housing helical track 10 could be smaller - such as 250, 200, 150 mm/rotation or even smaller - and/or the pitch of the sleeve helical track 8 and/or the housing helical track 10 could be bigger - such as 350, 400, 500 mm/rotation or even bigger - e.g. adapted to the specific material of the nut 6, sleeve 7 and housing 9 and/or the specific use and/or the pitch of the sleeve helical track 8 and/or the housing helical track 10 could be varying.

Thus, in this embodiment the sleeve helical track 8 and the housing helical track 10 are substantially identically except for the fact that they spiral in opposite directions so that the resulting rotation of the gear sleeve 7 in principle is doubled as opposed to if the gear nut 6 did only engage the sleeve helical track 8.

In this embodiment, the gearing 5 only comprises a single gear nut 6 but in another embodiment, the gearing 5 could comprise two, three, four or even more gear nuts 6 either interconnected or arranged separately.

Fig. 3 illustrates a blocking disc 3 in an open position, as seen from the top and fig. 4 illustrates a blocking disc 3 in a closed position, as seen from the top.

As previously explained the gear sleeve 7 is in this embodiment indirectly connected to the blocking disc 3 through a pin plate 16 engaging a pin track 17 on a blocking disc 3 through a guide pin 18 so that when the pin plate 16 is rotated the guide pin 18 will push or draw the blocking disc 3 so that it is linearly displaced in and out of the fluid flow through the riser pipe 2. Thus, in this embodiment, when the pin plate 16 has been rotated half a revolution the blocking disc 3 will either enable free flow through the entire diameter of the riser pipe 2 or the blocking disc 3 will fully block flow through the riser pipe 2.

However, in another embodiment the indirect connection could be formed in several other ways or the gear sleeve 7 could be directly connected to the blocking disc 3 so that the blocking disc 3 would be rotated in and out of the fluid flow.

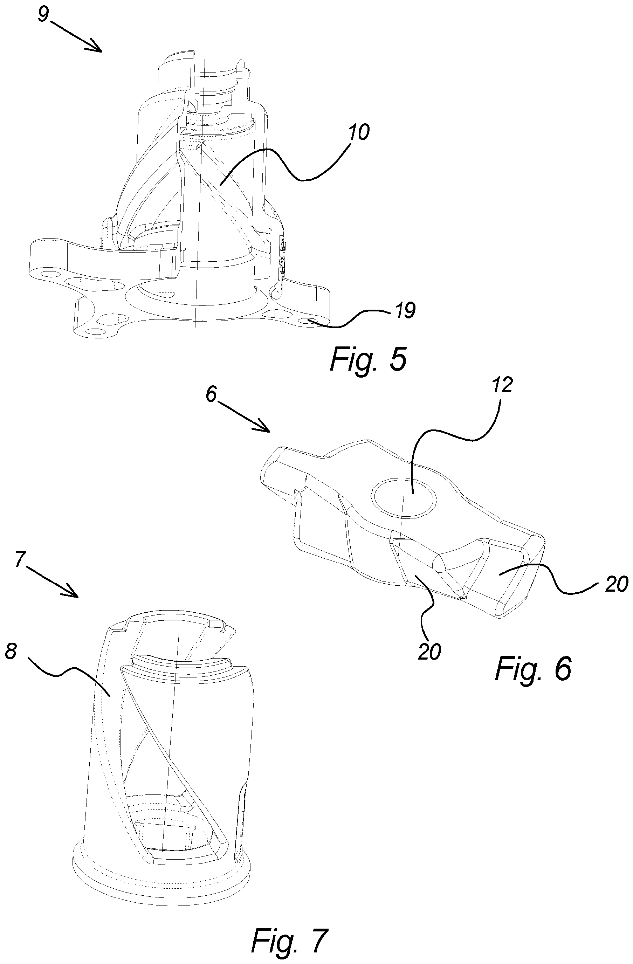

Fig. 5 illustrates a partial cross section through a gear housing 9, as seen in perspective.

In this embodiment, the housing helical track 10 is formed integrally in the inside wall of the gear housing 9. However, in another embodiment at least some of the housing helical track 10 could be formed in a separate part inserted into and rigidly connected to the rest of the gear housing 9.

In this embodiment, the gear housing 9 is provided with mounting holes 19 enabling that the gear housing 9 can be rigidly fixed to the rest of the hydrant 1 by means of bolts, so that the position of the gear housing 9 - and thereby the housing helical track 10 - is fixed in relation to said riser pipe 2.

However, in another embodiment the gear housing 9 can be rigidly fixed to the rest of the hydrant 1 by other means - such as rivets, welding, adhesive and/or other.

In this embodiment, the gear housing 9 is made entirely from cast iron enabling simple and inexpensive manufacturing of this relatively complex part. However, in another embodiment the housing 9 could only predominantly be made from cast iron or the housing 9 could also or instead be made from another material such as stainless steel, plastic, a composite material, aluminium, brass or other.

Fig. 6 illustrates a gear nut 6, as seen in perspective.
In this embodiment, the gear nut 6 is provided with substantially flat sliding surfaces 20 matching the pitch of the respective helical tracks 8, 10 that the surfaces 20 engage. However, in another embodiment the gear nut 6 could be designed differently - e.g. with round, oval or polygonal surfaces 20.

In this embodiment, the gear nut 6 is made entirely from brass providing good bearing qualities when being driven against the matching surfaces of the sleeve helical track 8 and the housing helical track 10. However, in another embodiment the nut 6 could predominantly be made from brass or the nut 6 could also or instead be made from another material such as stainless steel, plastic, a composite material, ceramic or other.

Fig. 7 illustrates a gear sleeve 7, as seen in perspective.

In this embodiment, the gear sleeve 7 is made entirely from cast stainless steel enabling simple and inexpensive manufacturing of this relatively complex part while at the same time ensuring that the sleeve 7 is more durable. However, in another embodiment the gear sleeve 7 could only predominantly be made from stainless steel or the sleeve 7 could also or instead be made from another material such as cast iron, plastic, a composite material, aluminium or other.

In the embodiment disclosed in fig. 1, 2 and 5-7 the gearing is disclosed where the gear sleeve 7 comprises two sleeve helical tracks 8, the gear housing 9 comprises two housing helical tracks 10 and the gear nut 6 is arranged to engage both sleeve helical tracks 8 and both housing helical tracks 10 at once.

However, in another embodiment the gear sleeve 7 would comprise another number of sleeve helical tracks 8 - such as one, three, four or even more -, the gear housing 9 would comprise another number of housing helical tracks 10 - such as one, three, four or even more - and the gear nut 6 would then be arranged to engage the corresponding number of helical tracks 8, 10.

The invention has been exemplified above with reference to specific examples of hydrants 1, blocking discs 3, gearing sleeves 7 and other. However, it should be understood that the invention is not limited to the particular examples described above but may be designed and altered in a multitude of varieties within the scope of the invention as specified in the claims.

### List

- 1.: Hydrant
- 2.: Riser pipe
- 3.: Blocking disc
- 4.: Stem
- 5.: Gearing
- 6.: Gear nut
- 7.: Gear sleeve
- 8.: Sleeve helical track
- 9.: Gear housing
- 10.: Housing helical track
- 11.: Externally threaded part of stem
- 12.: Internally threaded part of gear nut
- 13.: Blocking arrangement
- 14.: Interaction part
- 15.: Bearing arrangement
- 16.: Pin plate
- 17.: Pin track
- 18.: Guide pin
- 19.: Mounting hole
- 20.: Sliding surface

## Claims

1. A hydrant (1) comprising
a riser pipe (2) through which a fluid flow may be guided
a blocking disc (3) arranged to be displaced in and out of said fluid flow to block said fluid flow through said riser pipe (2),
a stem (4) arranged to actuate said blocking disc (3) through a gearing (5), wherein said gearing (5) of said hydrant (1) comprises
a gear nut (6) arranged to engage said stem (4) so that when said stem (4) and said gear nut (6) are mutually rotated said gear nut (6) is displaced along the longitudinal direction of said stem (4),
a gear sleeve (7) comprising a sleeve helical track (8), wherein said gear sleeve (7) is connected to said blocking disc (3),
**characterized in that**,
said gearing (5) of said hydrant (1) further comprises a gear housing (9) comprising a housing helical track (10), wherein the position of said gear housing (9) is fixed in relation to said riser pipe (2), and
wherein said gear nut (6) is arranged to engage both said sleeve helical track (8) and said housing helical track (10).

2. A hydrant (1) according to claim 1, wherein said gear sleeve (7) comprises at least two sleeve helical tracks (8), wherein said gear housing (9) comprises at least two housing helical tracks (10) and wherein said gear nut (6) is arranged to engage said at least two sleeve helical tracks (8) and said at least two housing helical tracks (10).

3. A hydrant (1) according to claim 1 or 2, wherein said gear nut (6) is arranged to extend through said sleeve helical track (8) and into said housing helical track (10).

4. A hydrant (1) according to any of the preceding claims, wherein said stem (4) comprises an externally threaded part (11) arranged to engage an internally threaded part (12) of said gear nut (6).

5. A hydrant (1) according to any of the preceding claims, wherein said gear sleeve (7) is arranged to enclose a part of said stem (4).

6. A hydrant (1) according to any of the preceding claims, wherein said gear housing (9) is arranged to enclose a part of said gear sleeve (7).

7. A hydrant (1) according to any of the preceding claims, wherein said gear sleeve (7) is arranged to rotate inside said gear housing (9).

8. A hydrant (1) according to any of the preceding claims, wherein said gear sleeve (7) is made in a first material, wherein said gear nut (6) is made in a second material and wherein said first material is different from said second material.

9. A hydrant (1) according to any of the preceding claims, wherein said gear nut (6) is predominantly made from brass.

10. A hydrant (1) according to any of the preceding claims, wherein the pitch of said sleeve helical track (8) is substantially identical with the pitch of said housing helical track (10).

11. A hydrant (1) according to any of the preceding claims, wherein the pitch of said sleeve helical track (8) and the pitch of said housing helical track (10) are substantially constant.

12. A hydrant (1) according to any of the preceding claims, wherein said sleeve helical track (8) and said housing helical track (10) spiral in opposite directions.

13. Use of a hydrant (1) according to any of the preceding claims as a free flow hydrant.

## Patentansprüche

1. Hydrant (1), umfassend
ein Steigrohr (2), durch das ein Fluidstrom geführt werden kann
eine Sperrscheibe (3), die angeordnet ist, um in den Fluidstrom hinein und aus diesem heraus verschoben zu werden, um den Fluidstrom durch das Steigrohr (2) zu blockieren;
einen Schaft (4), der angeordnet ist, um die Sperrscheibe (3) durch ein Getriebe (5) zu betätigen, wobei das Getriebe (5) des Hydranten (1) umfasst
eine Zahnradmutter (6), die angeordnet ist, um in den Schaft (4) einzugreifen, so dass, wenn der Schaft (4) und die Zahnradmutter (6) gegenseitig gedreht werden, die Zahnradmutter (6) entlang der Längsrichtung des Schafts (4) verschoben wird,
eine Zahnradhülse (7), die eine Hülsenschraubenbahn (8) umfasst, wobei die Zahnradhülse (7) mit der Sperrscheibe (3) verbunden ist,
**dadurch gekennzeichnet, dass**,
das Getriebe (5) des Hydranten (1) ferner ein Getriebegehäuse (9) umfasst, das eine Gehäuseschraubenbahn (10) umfasst, wobei die Position des Getriebegehäuses (9) in Bezug auf das Steigrohr (2) feststehend ist und
wobei die Zahnradmutter (6) angeordnet ist, um sowohl in die Hülsenschraubenbahn (8) als auch in die Gehäuseschraubenbahn (10) einzugreifen.

2. Hydrant (1) nach Anspruch 1, wobei die Zahnradhülse (7) mindestens zwei Hülsenschraubenbahnen (8) umfasst, wobei das Getriebegehäuse (9) mindestens zwei
Gehäuseschraubenbahnen (10) umfasst und wobei die Zahnradmutter (6) angeordnet ist, um in die mindestens zwei Hülsenschraubenbahnen (8) und die mindestens zwei Gehäuseschraubenbahnen (10) einzugreifen.

3. Hydrant (1) nach Anspruch 1 oder 2, wobei die Zahnradmutter (6) so angeordnet ist, dass sie sich durch die Hülsenschraubenbahn (8) und in die Gehäuseschraubenbahn (10) erstreckt.

4. Hydrant (1) nach einem der vorhergehenden Ansprüche, wobei der Schaft (4) einen Außengewindeteil (11) umfasst, der angeordnet ist, um in einen Innengewindeteil (12) der Zahnradmutter (6) einzugreifen.

5. Hydrant (1) nach einem der vorhergehenden Ansprüche, wobei die Zahnradhülse (7) angeordnet ist, um einen Teil des Schafts (4) zu umschließen.

6. Hydrant (1) nach einem der vorhergehenden Ansprüche, wobei das Getriebegehäuse (9) angeordnet ist, um einen Teil der Zahnradhülse (7) zu umschließen.

7. Hydrant (1) nach einem der vorhergehenden Ansprüche, wobei die Zahnradhülse (7) angeordnet ist, um sich innerhalb des Getriebegehäuses (9) zu drehen.

8. Hydrant (1) nach einem der vorhergehenden Ansprüche, wobei die Zahnradhülse (7) aus einem ersten Material hergestellt ist, wobei die Zahnradmutter (6) aus einem zweiten Material hergestellt ist und wobei sich das erste Material von dem zweiten Material unterscheidet.

9. Hydrant (1) nach einem der vorhergehenden Ansprüche, wobei die Zahnradmutter (6) überwiegend aus Messing besteht.

10. Hydrant (1) nach einem der vorhergehenden Ansprüche, wobei die Steigung der Hülsenschraubenbahn (8) im Wesentlichen mit der Steigung der Gehäuseschraubenbahn (10) identisch ist.

11. Hydrant (1) nach einem der vorhergehenden Ansprüche, wobei die Steigung der Hülsenschraubenbahn (8) und die Steigung der Gehäuseschraubenbahn (10) im Wesentlichen konstant sind.

12. Hydrant (1) nach einem der vorhergehenden Ansprüche, wobei die Hülsenschraubenbahn (8) und die Gehäuseschraubenbahn (10) in entgegengesetzte Richtungen spiralförmig verlaufen.

13. Verwendung eines Hydranten (1) nach einem der vorhergehenden Ansprüche als Frei stromhydrant.

## Revendications

1. Bouche d'incendie (1) comprenant
une colonne montante (2) à travers laquelle un écoulement de fluide peut être guidé
un disque de blocage (3) agencé pour être déplacé dans et hors dudit écoulement de fluide pour bloquer ledit écoulement de fluide à travers ladite colonne montante (2),
une tige (4) agencée pour actionner ledit disque de blocage (3) à travers un engrenage (5), ledit engrenage (5) de ladite bouche d'incendie (1) comprenant
un écrou d'engrenage (6) agencé pour venir en prise avec ladite tige (4) afin que lorsque ladite tige (4) et ledit écrou d'engrenage (6) tournent mutuellement ledit écrou d'engrenage (6) soit déplacé le long de la direction longitudinale de ladite tige (4),
une douille d'engrenage (7) comprenant un filetage hélicoïdale de douille (8), ladite douille d'engrenage (7) étant reliée audit disque de blocage (3),
**caractérisée en ce que**,
ledit engrenage (5) de ladite bouche d'incendie (1) comprenant en outre un carter d'engrenage (9) comprenant un filetage hélicoïdal de carter (10), ladite position dudit carter d'engrenage (9) étant fixe par rapport à ladite colonne montante (2), et
ledit écrou d'engrenage (6) est agencé pour venir en prise à la fois avec ledit filetage hélicoïdal de douille (8) et ledit filetage hélicoïdal de carter (10).

2. Bouche d'incendie (1) selon la revendication 1, ladite douille d'engrenage (7) comprenant au moins deux filetages hélicoïdaux de douille (8), ledit carter d'engrenage (9) comprenant au moins deux filetages hélicoïdaux de carter (10) et ledit écrou d'engrenage (6) étant agencé pour venir en prise avec lesdits au moins deux filetages hélicoïdaux de douille (8) et lesdits au moins deux filetages hélicoïdaux de carter (10).

3. Bouche d'incendie (1) selon la revendication 1 ou 2, ledit écrou d'engrenage (6) étant agencé pour s'étendre à travers ledit filetage hélicoïdal de douille (8) et dans ledit filetage hélicoïdal de carter (10).

4. Bouche d'incendie (1) selon l'une quelconque des revendications précédentes, ladite tige (4) comprenant une partie filetée extérieurement (11) agencée pour venir en prise avec une partie filetée intérieurement (12) dudit écrou d'engrenage (6).

5. Bouche d'incendie (1) selon l'une quelconque des revendications précédentes, ladite douille d'engrenage (7) étant agencée pour renfermer une partie de ladite tige (4).

6. Bouche d'incendie (1) selon l'une quelconque des revendications précédentes, ledit carter d'engrenage (9) étant agencé pour renfermer une partie de ladite douille d'engrenage (7).

7. Bouche d'incendie (1) selon l'une quelconque des revendications précédentes, ladite douille d'engrenage (7) étant agencée pour tourner à l'intérieur dudit carter d'engrenage (9).

8. Bouche d'incendie (1) selon l'une quelconque des revendications précédentes, ladite douille d'engrenage (7) étant réalisée dans un premier matériau, ledit écrou d'engrenage (6) étant réalisé dans un second matériau et ledit premier matériau étant différent dudit second matériau.

9. Bouche d'incendie (1) selon l'une quelconque des revendications précédentes, ledit écrou d'engrenage (6) étant constitué principalement de laiton.

10. Bouche d'incendie (1) selon l'une quelconque des revendications précédentes, ledit pas dudit filetage hélicoïdal de douille (8) étant sensiblement identique au pas dudit filetage hélicoïdal de carter (10).

11. Bouche d'incendie (1) selon l'une quelconque des revendications précédentes, ledit pas dudit filetage hélicoïdal de douille (8) et ledit pas dudit filetage hélicoïdal de carter (10) étant sensiblement constants.

12. Bouche d'incendie (1) selon l'une quelconque des revendications précédentes, ledit filetage hélicoïdal de douille (8) et ledit filetage hélicoïdal de carter (10) étant en spirale dans des directions opposées.

13. Utilisation d'une bouche d'incendie (1) selon l'une quelconque des revendications précédentes en tant que bouche d'incendie à écoulement libre.
